# EUROPEAN PATENT SPECIFICATION

(11) **EP 1 399 011 B1**
(45) Date of publication and mention of the grant of the patent: **06.04.2005**
(21) Application number: 02709981.1
(22) Date of filing: 28.01.2002
(51) Int. Cl.: A01G 3/033

(54) **METHOD OF REMOVING PHYLLOCLADES FROM PHYLLOCACTI**
VERFAHREN ZUR ABTRENNUNG VON PHYLLOKLADIEN VON PHYLLOCACTI
METHODE D'ENLEVEMENT DE PHYLLOCLADES DE PHYLLOCACTUS

(30) Priority: 29.01.2001 DK 200100147
(43) Date of publication of application: 24.03.2004
(73) Proprietor: Madsen, Kristian, 5270 Odense (DK)
(72) Inventor: Madsen, Kristian, 5270 Odense (DK)
(74) Representative: Roerboel, Leif
(86) International application number: PCT/DK2002/000062
(87) International publication number: WO 2002/060237

(56) References cited:
- EP-A- 0 981 950
- EP-A- 1 002 460
- DE-A- 4 110 582
- DE-U- 29 820 759
- US-A- 4 757 670
- US-A- 5 518 988

## Description

The present invention relates to a method of removing the upper phylloclades from Phyllocacti of the kind set forth in the preamble of claim 1 and to an apparatus for removing the upper phylloclades from Phyllocacti of the kind set forth in the preamble of claim 16.

### BACKGROUND ART

Phyllocacti are epiphytic plants native to a small region in the Organ Mountains north of Rio de Janeiro, Brazil in South America. Under natural conditions, Phyllocacti or *Schlumbergera truncata* will flower in mid to late November and *Schlumbergera bridgesii* in December thus the common names given are Thanksgiving and Christmas Cacti, respectively.

The Phyllocacti grow vegetatively by producing flat, leaf-like stem segments, so-called phylloclades connected at the mid-veins. The Phyllocacti have two to four saw-toothed serrates along the phylloclade margins. Holiday cactus can be propagated from seed, however, propagation by cuttings of 2 to 3 phylloclades produce saleable plants faster. Cuttings are usually stuck in the final container as either 3 or 4 cuttings in a 0 10 cm pot or 5 or 6 cuttings in a Ø 15 cm pot. In order to ensure that the Phyllocacti will flower in late November to early December for the typical use as a Christmas Cactus, it is necessary that by mid-June the plants are pinched back, i.e. the top of one or two phylloclades of each stem are removed. The segments removed can be rooted to establish stock plants for the following year. The removal of segments is a labour intensive and therefore costly process, which makes up for a considerable part of the total production cost. Up to now, such pinching or taking cuttings has been carried out manually. The top 1 or 2 segments are grasped with the fingers and with a twisting movement separated from the stem. This manual process is slow, expensive, repetitive tedious work and damaging to the arm, in particular wrist injuries are common. Several attempts have been made to mechanise this process, however, none of them has been commercially successful.

Another reason to cut back the top 1 or 2 segments of the stems is to secure a plant with stems comprising no more than four flat leaf-like stem segments (phylloclades) for reasons of stability. Stems made up of more segments will be unstable and likely damaged during transport.

The segments are connected at the mid-veins. In order to ensure that butts that will flower will be produced, it is necessary that the segments are tom off at the mid-veins. A segment that is cut off by means of a knife or scissors will not produce any butts that can flower.

### DISCLOSURE OF THE INVENTION

It is the object of the invention to provide a method of the kind referred to above, which allows mechanical removal of the top segments (phylloclades) of a Phyllocactus. This object is achieved by the characterising features of claim 1. By providing a means creating a mechanical impact to the top leaves, the top leaves can be removed without manual labour. It is another object of the present invention to provide an apparatus for removing the upper segments of a Phyllocactus of the kind referred to above which mechanises the segment-removing process. This object is achieved by the characterising features of claim 16. By providing a means applying a mechanical impact to the upper segments of the Phyllocacti, said upper segments can be removed without the use of manual labour.

According to an embodiment of the invention, the method and the apparatus comprise a stage in which the pots are tilted to ensure that the removed segments of the Phyllocacti or in the sales pot are disposed of.

According to another embodiment of the invention, the means for creating an impact is a rotary brush with bristles of flexible strip material attached to a rotating brush body.

According to another embodiment of the invention, the means for creating a mechanical impact is a brush with relatively stiff bristles and the Phyllocacti are held into place by retaining means.

According to another embodiment of the invention, the means for creating a mechanical impact to the Phyllocacti is a fluid jet.

According to another embodiment means are provided for clamping the Phyllocacti below the segments to be removed.

A further advantageous embodiment of the invention is based on the fact known per se that certain chemical agents have an effect on growth and ageing of plants. Thus Phyllocacti such as Rhipsalidopsis and are sensitive to ethylene. Exposing Phyllocacti to low concentrations of ethylene, i.e. concentrations below approximately 0.1 ppm, thus leads to a loss of buds and flowers, whereas higher concentrations facilitates separation of segments. High concentrations may also lead to intoxication impeding the further growth of the plant.

According to said advantageous embodiment of the invention the method is thus characterised by furthermore comprising the step of prior to the exertion of said mechanical impact to said segments exposing the Phyllocacti to a predetermined concentration of a gaseous agent for facilitating the mechanical removal of the segments of Phyllocacti.

Specifically said gaseous agent is ethylene or an ethylene releasing compound, such as Ethrel, Ethaphon or the like, and such chemical agents can be applied by either placing the plants in an atmosphere with a predetermined concentration of such agents or alternatively by spraying the plants with ethylene releasing compounds.

The optimal effect of the application of ethylene requires the proper combination of concentration of ethylene, temperature and duration of exposure. It has experimentally been established that the best overall effect is achieved by application of relatively high concentrations of ethylene over short periods of time. This leads to a good distribution of plant material with a minimal risk of damage to the plants. Thus ethylene concentrations in the range 10 to 1000 ppm have been found to be applicable, although a range of 50 to 500 has been found to yield more optimal results, particularly a good distribution within the plant material. The effect furthermore depends on temperature and duration of exposure. Good choices of duration of exposure have been found to be in the order of 12 hours for unripe segments, whereas a longer duration of exposure would be optimal for ripe segments, where a good choice has been found to be in the order of 24 hours. For the relatively high concentrations of ethylene as mentioned above serious damages of the plants have been observed after 72 hours duration of exposure.

According to the invention there is furthermore provided an apparatus comprising means for application of ethylene or an ethylene releasing compound to said Phyllocacti (1).

Said means for application of ethylene comprises according to one embodiment a sealed enclosure capable of accommodating said Phyllocacti (1) and containing an inlet valve for ethylene for obtaining an atmosphere with a given concentration of ethylene. The enclosure is furthermore provided with means for controlling the temperature of the atmosphere. Furthermore the apparatus is provided with means for controlling the duration of exposure of the plants.

According to an alternative embodiment of said apparatus according to the invention the apparatus comprises means for application of an ethylene releasing compound provided with spray members for spraying said Phyllocacti (1) with said ethylene releasing compound.

Although specific values of concentration of ethylene and duration of exposure have been mentioned above it is understood that these values should merely serve to indicate the order of magnitude of these parameters, and that these and other parameters may be further optimised by routine experimentation.

### BRIEF DESCRIPTION OF THE DRAWINGS

In the following detailed part of the description of the present invention, the invention will be explained in more detail with reference to the exemplary embodiments of the apparatus and Phyllocacti shown in the drawings, in which
Figure 1 is a side view of the apparatus according to the invention with Phyllocactus in a sales pot,
Figure 2 is a perspective view of a first embodiment of the apparatus according to the invention, and
Figure 3 is a perspective view of a second embodiment of the invention.

### DETAILED DESCRIPTION OF THE INVENTION

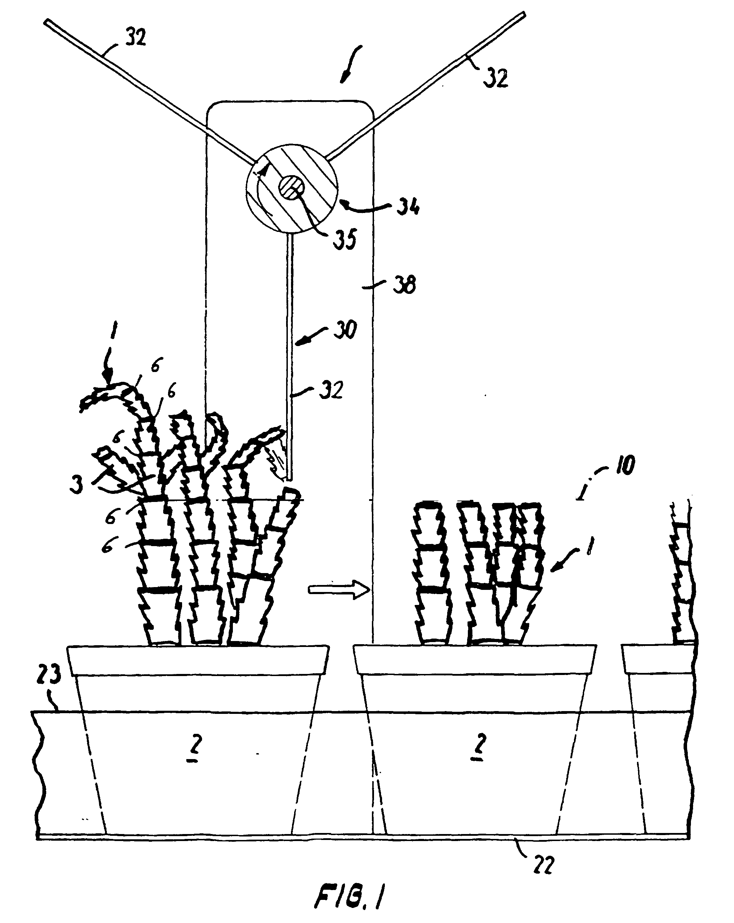

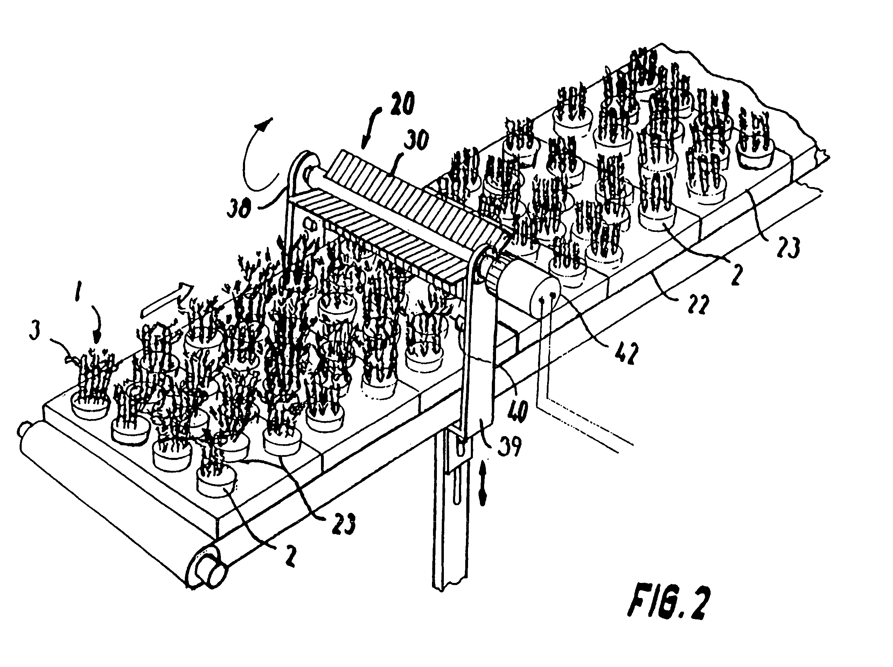

Figure 1 shows a Phyllocactus 1 which in a final container 2 (sales pot) has matured to a size that is suitable for sale on the conveyor of the apparatus for removing phylloclades. The stems 5 of the Phyllocacti comprise 5 to 6 segments 3 including the root segment. The desirable number of segments 3 for transport and sales is 4. An imaginary line 10 has been drawn which corresponds to the average height of the upper edge of the fourth segment 3, i.e. the average height of the joint 6 (midvein) between the fourth and the fifth segment 3. The segments above 3 this height are to be removed for reasons of stability and creating flowering butts. Figure 2 shows a perspective view of the apparatus 20 for removing upper segments 3 from Phyllocacti 1. The apparatus 20 comprises a conveyor 22 provided with a plurality of cavities 23 for securely supporting the pots 2. An electrical motor 25 powers the conveyor 22. Due to the mechanical impact forces applied to the Phyllocacti 1 it is necessary to secure the pots 2 against tilting. The cavities 23 may simply be circular openings in the top surface of the conveyor possibly supplied with a smaller sized circular opening in a lower support plate. The diameter of the two circular openings corresponds to the conical frustum shape of the pots 2 so that they are secured well against tilting. Any other cavity 23 suitable for holding a typical sales pot 2 could be used. A rotary brush 30 comprising radially extending strips 32 is placed above the conveyor 22. The rotary brush 30 comprises an elongated cylindrical body 34 rotatable about its longitudinal axis 35. The strips 32 are made of flexible material such as (synthetic) rubber or foam-rubber, wash-leather, (non-woven) cloth or the like and are attached to the elongated brush body 34. The strips 32 are radially and axially equally spaced and arranged with their flat side parallel with the longitudinal axis 35 of the brush body 34.

The longitudinal axis 35 of the brush body 35 extends substantially parallel with the upper surface of the conveyor 22 and extends at an angle in the range of 45 to 90° with the transport direction of the conveyor 20. The brush body 34 is supported between arms 38,39 which allow for height adjustment of the rotary brush 30 relative to the conveyor 22. The height-adjustment can be manual or automatic in response to a plant height sensor 40. A variable speed electric motor 42 is mounted on pivot arm 38 and coupled in a conventional and well known fashion to rotate the brush 30 about its longitudinal axis 35.

In another embodiment of the invention the rotary brush comprises 30 relatively stiff conventional plastic bristles (not shown). In this embodiment the Phyllocacti 1 are clamped between two flexible clamping members (not shown) during the brushing operation to prevent the stems from breaking below the fourth segment. Hereto the flexible members support the stems 5 of the Phyllocacti 1 just below the fifth segment 3.

By supporting the stems in this way it is secured that the stems are all oriented substantially upright so that the most of the phylloclades to be removed are placed above the imaginary line 10. If the stems are not supported and the stems are bend aside the line above which the leaves are to be removed will be arc shaped and it is more difficult to adjust the means for applying impact to the correct level.

According to a preferred embodiment the clamping means comprise at least one inflatable member (not shown). This member is preferably torus-shaped. The uninflated torus-shaped member is moved over the plant with the stems in the hole of the torus. The torus shaped member is then inflated and the diameter of the hole is reduced so that the inner surface of the torus shaped member supports the stems.

The brush member may also be a disk-shaped brush (not shown). This embodiment has the advantage the inclination of the brush with respect to the plants can be adjusted.

According to a preferred embodiment an optical recognition system (not shown) comprising a video camera and a signal processor is used to determine the area in which the segments are to be removed. The height and position adjustment of the impact means is controlled automatically in response to a signal from the optical recognition system.

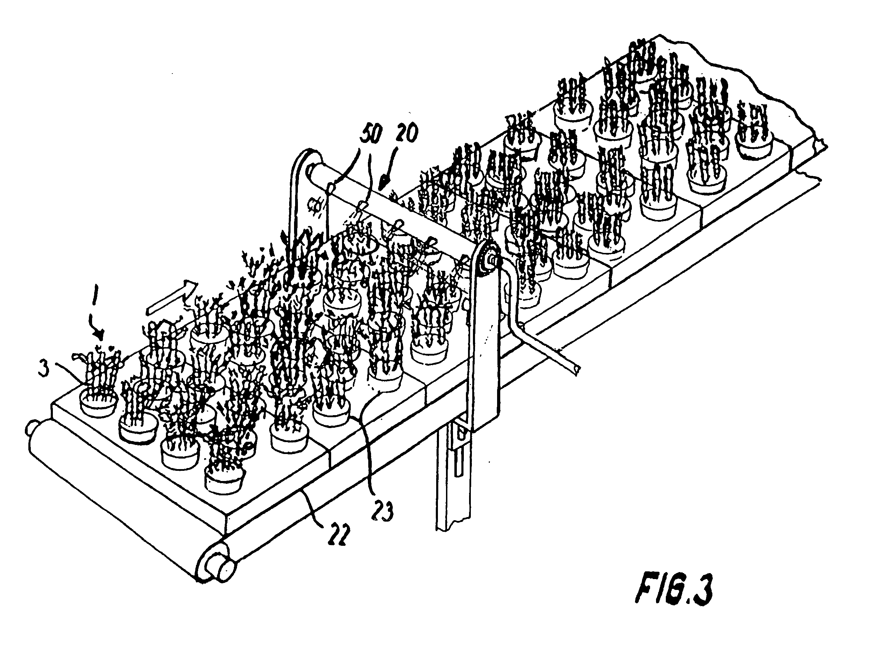

Figure 3 shows another embodiment in which the apparatus 20 comprises one or more water powered nozzles 50. The nozzle or nozzles 50 are arranged above and/or aside the conveyor 22 and directed towards the Phyllocacti 1 so as to hit the fifth and higher segments 3 in order to apply a mechanical impact that tears off the segments 3. In order to reduce the number of nozzles 50 required to cover the complete width of the conveyor 22 it is possible to use a nozzle or nozzles 50 that carry out a reciprocating angular or absolute movement substantially perpendicular to the movement of transport of the convenor 22.

According to an embodiment of the invention (not shown) the apparatus comprises a stationary substrate receiving the Phyllocacti. The means for applying a mechanical impact, such as the rotary brush 30 and/or the nozzles 50 are provided with (castor) wheels or the like and possibly guiding rails to allow movement over Phyllocacti on the substrate.

According to an embodiment of the invention the apparatus 20 is provided with means for tilting the Phyllocacti (not shown) after the segment removing operation in order to dispose of loose segments 3 on the Phyllocacti 1 or in the pot 2. The apparatus 20 may also be arranged such that the Phyllocacti 1 are tilted during the segment removing operation.

The method of operation will now be described. The Phyllocacti 1 are placed on the conveyor 22 in the suitable cavities 23. The height above which the segments 3 are to be removed is determined and the brushes 30 and/or the water jets 50 are correspondingly adjusted. The conveyor 22 transports the Phyllocacti 1 to the brush(es) 30 and/or water jets 50. Optionally the stems 5 of the Phyllocacti are clamped below the firth segment by flexible clamping members 46,47. The brushes 30 and/or the water jets 50 apply impact to the Phyllocacti 1 and the upper segments 3 of the Phyllocacti 1 are removed. As an optional step the Phyllocacti 1 are then tilted so that loose segments 3 in the plant 1 or pot 2 are disposed of.

According to one imbodiment of the invention there is furthermore provided an apparatus comprising means for application of ethylene or an ethylene releasing compound to said Phyllocacti (1).

Said means for application of ethylene comprises according to one embodiment a sealed enclosure (not shown in the figures) capable of accommodating said Phyllocacti (1) and containing an inlet valve for ethylene for obtaining an atmosphere with a given concentration of ethylene. The enclosure is furthermore provided with means for controlling the temperature of the atmosphere. Furthermore the apparatus is provided with means for controlling the duration of exposure of the plants.

According to an alternative embodiment of said apparatus according to the invention the apparatus comprises means for application of an ethylene releasing compound (not shown in the figures) provided with spray members for spraying said Phyllocacti (1) with said ethylene releasing compound.

Although specific values of concentration of ethylene and duration of exposure have been mentioned above it is understood that these values should merely serve to indicate the order of magnitude of these parameters, and that these and other parameters may be further optimised by routine experimentation.

### LIST OF REFERENCE NUMERALS

- 1: Phyllocactus
- 2: Pot
- 3: Segment
- 5: Stem
- 6: Joint
- 10: Imaginary line
- 20: Apparatus
- 22: Conveyor
- 23: Cavity
- 30: Rotary Brush
- 32: Strips
- 34: Brush Body
- 35: Axis
- 38: Pivot Arm
- 39: Pivot Arm
- 40: Sensor
- 42: Motor
- 44: Gear Box
- 50: Nozzle

## Claims

1. Method of removing upper stem segments (3) from Phyllocacti (1) comprising the following steps:
- providing a supply of Phyllocacti (1);
- determining a zone of the Phyllocacti (1) in which segments (3) are to be removed;
- providing mechanical means for applying a mechanical, non-cutting impact to said segments (3) in said determined zone;
- causing relative movement between the Phyllocacti and said means for applying mechanical non-cutting impact, whereby said zone of the Phyllocacti (1) in which segments (3) are to be removed is exposed to mechanical non-cutting impact from said means for applying mechanical non-cutting impact.

2. Method according to claim 1, **characterised by** furthermore prior to the exertion of said mechanical, non-cutting impact to said segments (3) comprising the step of subjecting said Phyllocacti (1) to a predetermined exposure of a gaseous agent for facilitating said removal of said segments (3) of Phyllocacti (1).

3. Method according to claim 2, **characterised in that** said gaseous agent being ethylene or an ethylene releasing compound.

4. Method according to claim 3, **characterised in that** the concentration of said ethylene being in the range 10 to 1000 ppm.

5. Method according to claim 3 or 4, **characterised in that** said exposing of Phyllocacti (1) takes place for a period of time in the range 10 to 30 hours.

6. Method according to any of the preceding claims 2 to 5 where said Phyllocacti (1) are subjected to said predetermined exposure of a gaseous agent by placement of the Phyllocacti (1) in an atmosphere with a predetermined concentration of said gaseous agent.

7. Method according to any of the preceding claims 2 to 5 wherein said Phyllocacti (1) are exposed to said predetermined concentration of a gaseous agent by spraying the Phyllocacti (1) with said ethylene releasing compound.

8. Method according to any preceding claims, **characterised by** furthermore comprising the step of providing means for clamping the stems (5) of the Phyllocacti (1), preferably below the segments (3) to be removed for supporting the stems (5) and ensuring that only the upper segments are removed.

9. Method according to claim 8, **characterised by** furthermore comprising the step of clamping the Phyllocacti (1) at least during the phase in which mechanical, non-cutting impact is applied to the segments (3) to be removed.

10. Method according to any of the claims 1 to 9, **characterised in that** the means for applying mechanical, non-cutting impact comprise at least one rotary brush (30) with strips (32) of flexible material attached to a brush body (34).

11. Method according to any of the claims 1 to 10, **characterised in that** the means for applying mechanical, non-cutting impact comprise at least one rotary brush (30) with relatively stiff bristles.

12. Method according to any of claims 1 to 11, **characterised in that** the means for applying mechanical, non-cutting impact comprise at least one fluid jet (50).

13. Method according to any of claims 1 to 12, **characterised by** providing two or more non-cutting impact applying means in series.

14. Method according to any of claims 1 to 13, **characterised by** resubjecting the Phyllocacti (1) to mechanical, non-cutting impact.

15. Method according to any of claims 1 to 14, **characterised by** the step of tilting the Phyllocacti (1) after the applying of the mechanical, non-cutting impact in order to dispose of loose segments (3).

16. Apparatus for carrying out the method according to any of the claims 1 to 15 of removing stem segments (3) from Phyllocacti comprising:
- a substrate (22) for carrying the Phyllocacti
- mechanical means (30,50) for applying a mechanical, non-cutting impact,
- means (22,25) for creating a relative movement between the Phyllocacti (1) and the means for applying a mechanical, non-cutting impact (30,50).

17. Apparatus according to claim 16, **characterised by** comprising means (38,39,40) for controlling the zone of the Phyllocacti (1) in which mechanical, non-cutting impact is applied to the segments (3).

18. Apparatus according to any of the claims 16 to 17, **characterised in that** the substrate is a conveyor that is preferably provided with pockets (23) for receiving the Phyllocacti.

19. Apparatus according to any of claims 16 to 18, **characterised by** comprising means (46,47) for clamping stems (5) of the Phyllocacti (1) below the segments (3) to be removed.

20. Apparatus according any of claims 16 to 19, **characterised in that** the means for applying mechanical, non-cutting impact comprise at least one rotary brush (30) with strips of flexible material (32) attached to a rotating brush body (34).

21. Apparatus according to any of claims 16 to 20, **characterised in that** the means for applying mechanical, non-cutting impact comprise at least one rotary brush (30) with relatively stiff bristles.

22. Apparatus according to any of claims 16 to 21, **characterised in that** the means for applying mechanical, non-cutting impact comprise at least one fluid jet (50).

23. Apparatus according to any of claims 16 to 22, **characterised by** comprising two or more non-cutting impact applying means in series.

24. Apparatus according to any of claims 16 to 23, **characterised by** comprising means for tilting the Phyllocacti (1) after the applying of the mechanical, non-cutting impact in order to dispose removed segments (3).

25. Apparatus according to any of claims 16 to 24, **characterised by** comprising means (38,39,40) for adjusting the position and angle of attack of the means for applying a mechanical, non-cutting impact relative to the Phyllocacti (1) on the substrate (22).

26. Apparatus according to any of claims 16 to 25, **characterised by** comprising means for creating reciprocative movement of the means for applying a mechanical, non-cutting impact.

27. Apparatus according to any preceding claim 16 to 26, **characterised by** furthermore comprising means for application of ethylene or an ethylene releasing compound to said Phyllocacti (1).

28. Apparatus according to claim 27, **characterised in that** said means for . application of ethylene comprises an enclosure capable of accommodating said Phyllocacti (1) and containing an atmosphere with a given concentration of ethylene.

29. Apparatus according to any preceding claim 27, **characterised by** furthermore comprising means for application of an ethylene releasing compound comprises spray members for spraying said Phyllocacti (1) with said ethylene releasing compound.

## Patentansprüche

1. Verfahren zum Entfernen der oberen Stammsegmente (3) von Phyllocacti (1), umfassend die folgenden Schritte:
- das Bereitstellen eines Angebots an Phyllocacti (1);
- das Ermitteln einer Zone der Phyllocacti (1), in der Segmente (3) entfernt werden sollen;
- das Bereitstellen mechanischer Mittel zum Ausführen einer mechanischen, nicht-schneidenden Einwirkung an den Segmenten (3) in der ermittelten Zone;
- das Bewirken einer relativen Bewegung zwischen den Phyllocacti und den Mitteln zum Ausführen der mechanischen, nicht-schneidenden Einwirkung, wobei die Zone der Phyllocacti (1), in der Segmente (3) entfernt werden sollen, der mechanischen, nicht-schneidenden Einwirkung durch die Mittel zum Ausführen der mechanischen, nicht-schneidenden Einwirkung ausgesetzt ist.

2. Verfahren gemäß Anspruch 1, **dadurch gekennzeichnet, dass** es vorangehend zum Ausführen der mechanischen, nicht-schneidenden Einwirkung an den Segmenten (3) weiterhin den Schritt umfasst, dass die Phyllocacti (1) einem vorgegebenen Aussetzen eines gasförmigen Agens zur Erleichterung des Entfernens der Segmente (3) der Phyllocacti (1) unterworfen werden.

3. Verfahren gemäß Anspruch 2, **dadurch gekennzeichnet, dass** das gasförmige Agens Ethylen oder eine Ethylen freisetzende Verbindung ist.

4. Verfahren gemäß Anspruch 3, **dadurch gekennzeichnet, dass** die Konzentration des Ethylens in einem Bereich von 10 bis 1000 ppm liegt.

5. Verfahren gemäß Anspruch 3 oder 4, **dadurch gekennzeichnet, dass** das Aussetzen der Phyllocacti (1) für eine Zeitspanne im Bereich von 10 bis 30 Stunden stattfindet.

6. Verfahren gemäß einem der vorangehenden Ansprüche 2 bis 5, wobei die Phyllocacti (1) dem vorgegebenen Aussetzen eines gasförmigen Agens durch Einbringen der Phyllocacti (1) in eine Atmosphäre mit einer vorgegebenen Konzentration des gasförmigen Agens unterworfen werden.

7. Verfahren gemäß einem der vorangehenden Ansprüche 2 bis 5, wobei die Phyllocacti (1) der vorgegebenen Konzentration eines gasförmigen Agens durch Besprühen der Phyllocacti (1) mit der Ethylen freisetzenden Verbindung ausgesetzt werden.

8. Verfahren gemäß einem der vorangehenden Ansprüche, **dadurch gekennzeichnet, dass** es weiterhin den Schritt der Bereitstellung von Mitteln zum Festklemmen der Stämme (5) der Phyllocacti (1), vorzugsweise unterhalb der Segmente (3), die entfernt werden sollen, zum Abstützen der Stämme (5) und zum Sicherstellen, dass nur die oberen Segmente entfernt werden, umfasst.

9. Verfahren gemäß Anspruch 8, **dadurch gekennzeichnet, dass** es weiterhin den Schritt des Festklemmens der Phyllocacti (1), zumindest während der Phase, in der die mechanische, nicht-schneidende Einwirkung auf die Segmente (3), die entfernt werden sollen, ausgeführt wird, umfasst.

10. Verfahren gemäß einem der Ansprüche 1 bis 9, **dadurch gekennzeichnet, dass** die Mittel zur Ausführung der mechanischen, nicht-schneidenden Einwirkung mindestens eine rotierende Bürste (30) mit Borsten (32) aus biegsamen Material, angebracht an einem Bürstenkörper (34), umfassen.

11. Verfahren gemäß einem der Ansprüche 1 bis 10, **dadurch gekennzeichnet, dass** die Mittel zum Ausführen der mechanischen, nicht-schneidenden Einwirkung mindestens eine rotierende Bürste (30) mit relativ steifen Borsten, umfassen.

12. Verfahren gemäß einem der Ansprüche 1 bis 11, **dadurch gekennzeichnet, dass** die Mittel zum Ausführen der mechanischen, nicht-schneidenden Einwirkung mindestens eine Flüssigkeitsdüse (50) umfassen.

13. Verfahren gemäß einem der Ansprüche 1 bis 12, **dadurch gekennzeichnet, dass** zwei oder mehrere eine nicht-schneidende Einwirkung ausübende Mittel in Serie bereitgestellt werden.

14. Verfahren gemäß einem der Ansprüche 1 bis 13, **dadurch gekennzeichnet, dass** die Phyllocacti (1) der mechanischen, nicht-schneidenden Einwirkung wiederholt unterzogen werden.

15. Verfahren gemäß einem der Ansprüche 1 bis 14, **gekennzeichnet durch** den Schritt des Kippens der Phyllocacti (1) nach dem Ausführen der mechanischen, nicht-schneidenden Einwirkung, um lose Segmente (3) zu beseitigen.

16. Vorrichtung zum Durchführen des Verfahrens gemäß einem der Ansprüche 1 bis 15 zum Entfernen von Stammsegmenten (3) von Phyllocacti, umfassend:
- einen Träger (22) zur Beförderung der Phyllocacti;
- mechanische Mittel (30, 50) zum Ausführen einer mechanischen, nicht-schneidenden Einwirkung,
- Mittel (22, 25) zum Schaffen einer relativen Bewegung zwischen den Phyllocacti (1) und den Mitteln zum Ausführen einer mechanischen, nicht-schneidenden Einwirkung (30, 50).

17. Vorrichtung gemäß Anspruch 16, **dadurch gekennzeichnet, dass** sie Mittel (38, 39, 40) zum Kontrollieren der Zone der Phyllocacti (1), in der eine mechanische, nicht-schneidende Einwirkung auf die Segmente (3) ausgeführt wird, umfasst.

18. Vorrichtung gemäß einem der Ansprüche 16 bis 17, **dadurch gekennzeichnet, dass** der Träger ein Förderband ist, das vorzugsweise mit Taschen (23) zur Aufnahme der Phyllocacti versehen ist.

19. Vorrichtung gemäß einem der Ansprüche 16 bis 18, **dadurch gekennzeichnet, dass** sie Mittel (46, 47) zum Einklemmen von Stämmen (5) der Phyllocacti (1) unterhalb der Segmente (3), die entfernt werden sollen, umfasst.

20. Vorrichtung gemäß einem der Ansprüche 16 bis 19, **dadurch gekennzeichnet, dass** die Mittel zum Ausführen einer mechanischen, nicht-schneidenden Einwirkung mindestens eine rotierende Bürste (30) mit Borsten aus biegsamem Material (32), angebracht an einen rotierenden Bürstenkörper (31), umfassen.

21. Vorrichtung gemäß einem der Ansprüche 16 bis 20, **dadurch gekennzeichnet, dass** die Mittel zum Ausführen der mechanischen, nicht-schneidenden Einwirkung mindestens eine rotierende Bürste (30) mit relativ steifen Borsten umfassen.

22. Vorrichtung gemäß einem der Ansprüche 16 bis 21, **dadurch gekennzeichnet, dass** die Mittel zum Ausführen einer mechanischen, nicht-schneidenden Einwirkung mindestens eine Flüssigkeitsdüse (50) umfassen.

23. Vorrichtung gemäß einem der Ansprüche 16 bis 22, **dadurch gekennzeichnet, dass** sie zwei oder mehrere eine nicht-schneidende Einwirkung ausübende Mittel in Serie umfassen.

24. Vorrichtung gemäß einem der Ansprüche 16 bis 23, **dadurch gekennzeichnet, dass** sie Mittel zum Kippen der Phyllocacti (1) nach dem Ausführen der mechanischen, nicht-schneidenden Einwirkung umfasst, um entfernte Segmente (3) zu beseitigen.

25. Vorrichtung gemäß einem der Ansprüche 16 bis 24, **dadurch gekennzeichnet, dass** sie Mittel (38, 39, 40) zum Einstellen der Position und des Winkels des Angriffs der Mittel zum Ausführen der mechanischen, nicht-schneidenden Einwirkung, relativ zu den Phyllocacti (1) auf dem Träger (22) umfasst.

26. Vorrichtung gemäß einem der Ansprüche 16 bis 25, **dadurch gekennzeichnet, dass** sie Mittel zum Schaffen einer gegenläufigen Bewegung der Vorrichtung zum Ausführen einer mechanischen, nicht-schneidenden Einwirkung umfasst.

27. Vorrichtung gemäß einem der vorangehenden Ansprüche 16 bis 26, **dadurch gekennzeichnet, dass** sie weiterhin Mittel zum Aufbringen von Ethylen oder einer Ethylen freisetzenden Verbindung auf die Phyllocacti (1) umfasst.

28. Vorrichtung gemäß Anspruch 27, **dadurch gekennzeichnet, dass** die Mittel zum Aufbringen von Ethylen ein Gehäuse, geeignet zur Aufnahme der Phyllocacti (1) und enthaltend eine Atmosphäre mit einer gegebenen Konzentration von Ethylen, umfassen.

29. Vorrichtung gemäß dem vorangehenden Anspruch 27, **dadurch gekennzeichnet, dass** sie weiterhin Mittel aufweist zum Aufbringen einer Ethylen freisetzenden Verbindung, umfassend Sprühelemente zum Besprühen der Phyllocacti (1) mit der Ethylen freisetzenden Verbindung.

## Revendications

1. Procédé d'élimination de segments supérieurs de tige (3) de Phyllocacti (1), comprenant les étapes suivantes :
- disposer d'un apport en Phyllocacti (1) ;
- déterminer une zone du Phyllocacti (1), dans laquelle les segments (3) doivent être éliminés ;
- disposer de moyens mécaniques pour appliquer un impact mécanique, non coupant auxdits segments (3) dans ladite zone déterminée ;
- provoquer un mouvement relatif entre le Phyllocacti et ledit moyen pour appliquer un impact mécanique, non coupant, où ladite zone du Phyllocacti (1), dans laquelle les segments (3) doivent être éliminés, est exposée à l'impact mécanique, non coupant, depuis ledit moyen pour appliquer un impact mécanique, non coupant.

2. Procédé selon la revendication 1, caractérisé en outre, avant la mise en oeuvre dudit impact mécanique, non coupant sur lesdits segments (3), par le fait qu'il comprend l'étape de soumettre ledit Phyllocacti (1) à une exposition prédéterminée à un agent gazeux pour faciliter ladite élimination desdits segments (3) de Phyllocacti (1).

3. Procédé selon la revendication 2, **caractérisé en ce que** ledit agent gazeux est de l'éthylène ou un composé libérant de l'éthylène.

4. Procédé selon la revendication 3, **caractérisé en ce que** la concentration en ledit éthylène se situe dans l'intervalle allant de 10 à 1000 ppm.

5. Procédé selon la revendication 3 ou 4, **caractérisé en ce que** ladite exposition du Phyllocacti (1) est réalisée pendant une durée allant de 10 à 30 heures.

6. Procédé selon l'une quelconque des revendications précédentes 2 à 5, où lesdits Phyllocacti (1) sont exposés à ladite exposition prédéterminée à un agent gazeux par disposition des Phyllocacti (1) dans une atmosphère avec une concentration prédéterminée dudit agent gazeux.

7. Procédé selon l'une quelconque des revendications précédentes 2 à 5, où lesdits Phyllocacti (1) sont exposés à ladite exposition prédéterminée à un agent gazeux par pulvérisation des Phyllocacti (1) avec ledit composé libérant de l'éthylène.

8. Procédé selon l'une quelconque des revendications précédentes, **caractérisé en outre, en ce qu'**il comprend l'étape de disposer des moyens pour pincer les tiges des Phyllocacti (1), de préférence sous les segments (3) à éliminer, pour supporter les tiges (5) et assurer sur seuls les segments supérieurs sont éliminés.

9. Procédé selon la revendication 8, **caractérisé en outre, en ce qu'**il comprend l'étape de pincement des Phyllocacti (1) au moins pendant la phase pendant laquelle on applique l'impact mécanique, non coupant, aux segments (3) à éliminer.

10. Procédé selon l'une quelconque des revendications précédentes 1 à 9, **caractérisé en ce que** les moyens pour appliquer l'impact mécanique, non coupant, comprend au moins une brosse rotative (30) avec bandes (32) en un matériau flexible, attachées sur le corps de la brosse (34).

11. Procédé selon l'une quelconque des revendications précédentes 1 à 10, **caractérisé en ce que** les moyens pour appliquer l'impact mécanique, non coupant, comprend au moins une brosse rotative (30) avec des poils relativement rigides.

12. Procédé selon l'une quelconque des revendications précédentes 1 à 11, **caractérisé en ce que** les moyens pour appliquer l'impact mécanique, non coupant, comprennent au moins un jet de fluide (50).

13. Procédé selon l'une quelconque des revendications précédentes 1 à 12, **caractérisé en ce que** l'on procure deux moyens ou plus d'application d'un impact non coupant, en série.

14. Procédé selon l'une quelconque des revendications précédentes 1 à 13, **caractérisé en ce que** l'on resoumet les Phyllocacti (1) à un impact mécanique, non coupant.

15. Procédé selon l'une quelconque des revendications précédentes 1 à 14, **caractérisé par** l'étape d'inclinaison des Phyllocacti (1) après application d'un impact mécanique, non coupant, afin d'éliminer les segments (3) libres.

16. Appareil pour réaliser le procédé selon l'une quelconque des revendications 1 à 15, d'élimination de segments (3) de tige de Phyllocactus (1), comprenant :
- un substrat (22) pour transporter les Phyllocactus,
- des moyens mécaniques (30, 50) pour appliquer un impact mécanique, non coupant,
- des moyens (22, 25) pour créer un mouvement relatif entre les Phyllocactus (1) et les moyens pour appliquer un impact mécanique, non coupant (30, 50).

17. Appareil selon la revendication 16, **caractérisé en ce qu'**il comprend des moyens (38, 39, 40) pour contrôler la zone des Phyllocactus (1), dans laquelle l'impact mécanique, non coupant est appliqué sur les segments (3).

18. Appareil selon l'une quelconque des revendications 16 à 17, **caractérisé en ce que** le substrat est un tapis, qui est muni de préférence de poches (23) pour recevoir les Phyllocactus.

19. Appareil selon l'une quelconque des revendications 16 à 18, **caractérisé en ce qu'**il comprend des moyens (46, 47) pour pincer les tiges (5) des Phyllocactus (1) sous les segments (3) à éliminer.

20. Appareil selon l'une quelconque des revendications 16 à 19, caractérisé en ce les moyens pour appliquer un impact mécanique, non coupant, comprennent au moins une brosse rotative (30) avec bandes (32) en un matériau flexible, attachées sur le corps de la brosse (34).

21. Appareil selon l'une quelconque des revendications 16 à 20, caractérisé en ce les moyens pour appliquer un impact mécanique, non coupant, comprennent au moins une brosse rotative (30) avec des poils relativement rigides.

22. Appareil selon l'une quelconque des revendications 16 à 21, caractérisé en ce les moyens pour appliquer un impact mécanique, non coupant, comprennent au moins un jet de fluide (50).

23. Appareil selon l'une quelconque des revendications 16 à 22, **caractérisé en ce qu'**il comprend deux moyens ou plus d'application d'un impact non coupant, en série.

24. Appareil selon l'une quelconque des revendications 16 à 23, **caractérisé en ce qu'**il comprend des moyens pour incliner les Phyllocacti (1) après application de l'impact mécanique, non coupant, afin de se débarrasser des segments (3) éliminés.

25. Appareil selon l'une quelconque des revendications 16 à 24, **caractérisé en ce qu'**il comprend des moyens (38, 39, 40) pour ajuster la position et l'angle d'attaque des moyens pour appliquer un impact mécanique, non coupant par rapport aux Phyllocacti (1) sur le substrat (22).

26. Appareil selon l'une quelconque des revendications 16 à 25, **caractérisé en ce qu'**il comprend des moyens pour créer un mouvement réciproque des moyens pour appliquer un impact mécanique, non coupant.

27. Appareil selon l'une quelconque des revendications 16 à 26, **caractérisé en ce qu'**il comprend, en outre, des moyens d'application d'éthylène ou d'un composé libérant de l(éthylène sur lesdits Phyllocacti (1).

28. Appareil selon la revendication 27, **caractérisé en ce que** lesdits moyens d'application d'éthylène comprennent un espace capable d'accueillir lesdits Phyllocacti (1) et contenant une atmosphère avec une concentration donnée d'éthylène.

29. Appareil selon la revendication 27, **caractérisé en ce qu'**il comprend en outre, des moyens pour l'application d'un composé libérant de l'éthylène, qui comprennent des éléments de pulvérisation pour pulvériser lesdits Phyllocacti (1) avec ledit composé libérant de l'éthylène.
